Europäisches Patentamt

European Patent Office

Office européen des brevets

(11) Numéro de publication: **0 344 034 A1**

# DEMANDE DE BREVET EUROPEEN

(21) Numéro de dépôt: **89401283.0**

(22) Date de dépôt: **09.05.89**

(51) Int. Cl.⁴: **B 23 K 11/24**

(30) Priorité: **25.05.88 FR 8806957**

(43) Date de publication de la demande:
**29.11.89 Bulletin 89/48**

(84) Etats contractants désignés: **DE GB IT**

(71) Demandeur: **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur: **Vigne, Michel**
**5bis Allée des Bosquets**
**F-93600 Aulnay Sous Bois (FR)**

(74) Mandataire: **Durand, Yves Armand Louis et al**
**CABINET WEINSTEIN 20, Avenue de Friedland**
**F-75008 Paris (FR)**

(54) **Procédé de soudage par résistance et dispositif pour sa mise en oeuvre.**

(57)  La présente invention concerne un procédé et un système de soudage par résistance.

Le système est caractérisé en ce que le capteur (12) est un capteur de force mesurant l'effort exercé par l'électrode sur la pièce à souder (3, 4), et en ce que le dispositif de commande (9) est programmé pour donner des ordres prédéterminés au robot lorsque l'effort franchit lesdites valeurs de seuil prédéterminées.

L'invention trouve application dans le domaine de l'automobile.

FIG. 1

EP 0 344 034 A1

## Description

## Procédé de soudage par résistance et dispositif pour sa mise en oeuvre

L'invention concerne un procédé de soudage par résistance et un dispositif pour sa mise en oeuvre.

On connaît déjà des procédés et dispositifs de soudage de ce type, utilisant au moins une électrode chauffante, selon lesquels on met cette électrode en contact avec la pièce à souder, exerce un effort par l'électrode sur la pièce à souder selon un cycle au cours duquel cet effort augmente, puis diminue et fait passer au cours dudit cycle de soudage un courant électrique dans ladite électrode.

Cet état de la technique connu implique de déterminer pour chaque type de pièces à souder, essentiellement en fonction de la nature et de l'épaisseur des pièces, comment doivent évoluer certains paramètres de soudage en fonction du temps ou une durée minimale et on règle le dispositif en conséquence.

Cette manière de procéder fait que le temps nécessaire pour effectuer un point de soudure est toujours le même pour un type de pièces donné. Or, dans les fabrications en très grande série, comme c'est le cas dans l'industrie automobile, il peut y avoir plusieurs milliers de points de soudure sur un seul véhicule.

L'invention a pour but d'optimiser la durée de chaque opération de soudure et de la réduire autant que possible afin d'accroître la productivité.

Pour atteindre ce but, le procédé selon l'invention est caractérisé en ce que l'on établit des valeurs de seuil dudit effort par des essais préalables en fonction du type des pièces à souder, mesure ledit effort au cours du cycle de soudage et commande certaines opérations de soudage lorsque l'effort mesuré franchit les valeurs de seuil correspondantes.

Selon une caractéristique avantageuse de l'invention, on établit une première valeur de seuil pendant la phase d'augmentation d'effort et fait passer le courant électrique dans l'électrode lorsque l'effort mesuré dépasse cette première valeur de seuil.

Selon encore une autre caractéristique avantageuse de l'invention, on établit une deuxième valeur de seuil indicatrice d'une qualité satisfaisante de la soudure, et vérifie pendant le passage du courant si l'effort franchit cette deuxième valeur de seuil.

Selon encore une autre caractéristique avantageuse de l'invention, on établit une troisième valeur de seuil pendant la phase de diminution de l'effort, à laquelle on peut donner l'ordre de déplacer le robot afin que ce déplacement ait lieu le plus tôt possible après l'ouverture de la pince, compte tenu du temps de dialogue avec le robot, et on donne cet ordre lorsque l'effort mesuré franchit cette troisième valeur de seuil.

Selon encore une autre caractéristique avantageuse de l'invention, on déclenche une alarme ou une opération prédéterminée si l'un des seuils n'est pas franchi au bout d'une durée de temps prédéterminée.

Le système pour la mise en oeuvre du procédé selon l'invention est du type comprenant au moins une électrode chauffante commandée par un robot et apte à exercer des efforts sur une pièce à souder suivant un cycle au cours duquel cet effort augmente, puis diminue, au moins un capteur de mesure d'un paramètre de soudage et un dispositif de commande programmable apte à recevoir des signaux du capteur et à donner des ordres au robot en fonction de ces signaux, et est caractérisé en ce que le capteur est un capteur de force mesurant l'effort exercé par l'électrode sur la pièce à souder et en ce que le dispositif de commande est programmé pour donner des ordres prédéterminés au robot lorsque l'effort franchit lesdites valeurs de seuil prédéterminées.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels :

La figure 1 est un schéma bloc d'un système de soudage par résistance selon la présente invention ; et

La figure 2 montre, de façon schématique, sous forme d'une courbe caractéristique, l'effort exercé par une électrode en fonction du temps, pendant un cycle de soudage.

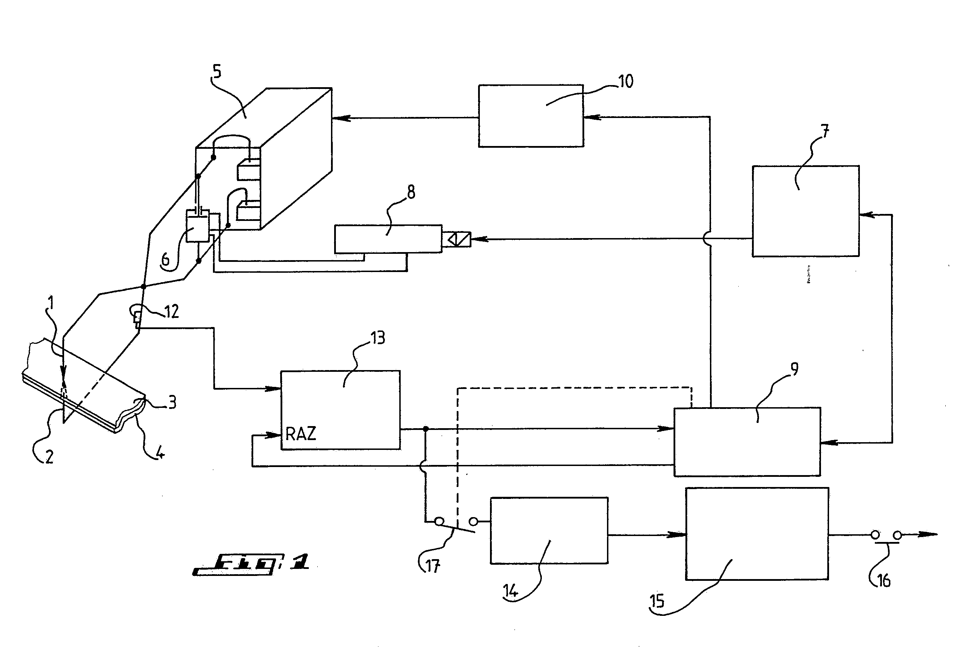

Sur la figure 1, on a représenté schématiquement en 1 et 2 les deux électrodes d'une pince à souder d'un robot, qui sont destinées dans l'exemple illustré à souder deux tôles 3 et 4. La pince est reliée électriquement à un transformateur de soudage 5 du robot et susceptible d'être appliquée sous pression contre les faces externes des deux tôles, sous l'effet d'un vérin 6. Ce dernier est commandé par l'armoire 7 du robot par l'intermédiaire d'une électrovanne 8. En 9 on a indiqué un dispositif de commande programmable de soudage, qui est relié à l'armoire 7 et commande, par l'intermédiaire d'un circuit de puissance 10, le transformateur 5. Un capteur d'effort 12, tel qu'un capteur piézo-électrique à quartz est placé dans le support de bras de la pince non parcouru par le courant de soudage, c'est-à-dire le support de bras de l'électrode 2 dans l'exemple représenté. Ce capteur est relié à un premier conditionneur 13. La sortie de ce conditionneur est reliée, d'une part, à la commande programmable de soudage 9 et, d'autre part, par l'intermédiaire d'un interrupteur 17, à un second conditionneur 14. La commande programmable 9 est reliée à une entrée de remise à zéro RAZ du conditionneur 13. La sortie du second conditionneur 14 est appliquée à un relais de seuil 15 destiné à actionner un contact 16 monté dans son circuit de sortie.

En se reportant aux figures, on décrira ci-après le fonctionnement du dispositif qui vient d'être décrit. Cette description révèlera également la structure des différents dispositifs constitutifs du sytème selon l'invention et les étapes du procédé que ce système met en oeuvre.

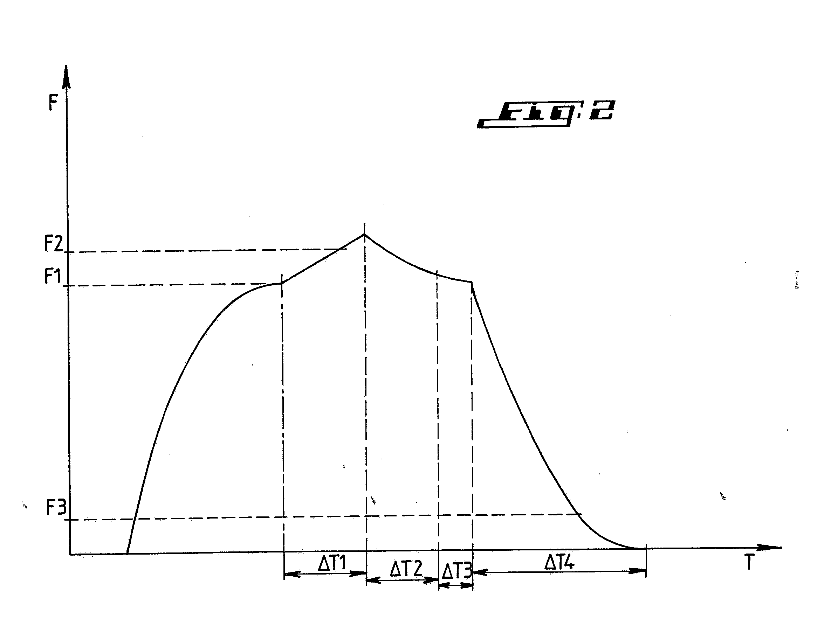

La figure 2 montre schématiquement l'effort qu'exercent les électrodes 1 et 2 de la pince à souder sur les tôles à assembler 3 et 4 au cours d'un cycle de soudage, sous l'effet du vérin 6. La courbe caractéristique F des efforts comporte trois valeurs de seuil F1, F2 et F3 que l'on établit par des essais préalables en fonction du type des pièces à souder. Il s'agit donc de valeurs programmables. La valeur F1 correspond à l'effort de soudage dont on a besoin pour un assemblage de tôles données. La valeur F2 représente le seuil minimal d'effort qui correspond à une qualité du point de soudure correcte. La valeur de seuil F3 est la valeur à laquelle on peut déjà donner l'ordre de déplacer le robot, même si la pince n'est pas encore complètement ouverte, pour que ce déplacement intervienne dès que possible après ouverture de la pince, compte tenu du temps de dialogue entre la commande de soudage et le robot. L'établissement de ces trois valeurs de seuil constitue une particularité fondamentale de la présente invention.

Sous l'action du vérin 6, l'effort F de la pince à souder avec ses électrodes 1 et 2 augmente de la manière représentée. Le capteur piézo-électrique à quartz 12 transforme l'effort en signaux électriques, qui sont appliqués au premier conditionneur 13. Celui-ci est adapté pour transformer les signaux reçus en tensions analogiques proportionnelles aux signaux reçus et étalonnées selon une échelle d'efforts. Le conditionneur comporte également des moyens de filtrage pour éliminer les parasites de fréquence supérieure ou égale à 2,5 KHz par exemple. Avant chaque cycle de soudage, le conditionneur est remis à zéro par la commande programmable 9. Les signaux de sortie du conditionneur 13 sont appliqués à la commande 9 qui les compare à la première valeur du seuil F1. Lorsque ce seuil est atteint, la commande programmable 9 déclenche le passage du courant de soudage dans la pince et ferme l'interrupteur 17 qui est normalement ouvert, comme cela est illustré schématiquement par la ligne interrompue.

La fermeture de l'interrupteur 17 permet au second conditionneur 14 de recevoir les signaux de sortie du convertisseur 13. Le convertisseur 14 amplifie le signal d'effort pendant le passage du courant. Son gain est réglable et doit être adapté en fonction des longueurs des bras de la pince. Si la valeur de seuil F2 n'est pas franchie au bout d'un certain temps, le relais 15 ferme l'interrupteur 16, ce qui peut déclencher par exemple une alarme ou la modification de certains paramètres de soudage. Si l'effort F évolue selon la figure 2, la commande programmable 9 ouvre l'interrupteur 17 après le franchissement de la valeur de seuil F2. Le second conditionneur 14 ne reçoit alors plus que le signal du premier conditionneur 13. Après la phase Δ T1 de passage d'un courant, l'effort F diminue relativement lentement pendant une période de temps Δ T2 que l'on appelle période de forgeage, le courant étant coupé. Les tôles 3 et 4 se fixent pendant la solidification et le refroidissement. Sur la figure on reconnaît une troisième période Δ T3 de la phase de soudure que l'on appelle cadence et qui établit la transition avec la phase suivante Δ T4 de relâchement de l'effort. Lorsque pendant cette phase l'effort en diminuant atteint la valeur de seuil F3, on peut déjà donner l'ordre de déplacer le robot même si la pince n'est pas encore complètement ouverte, afin que le déplacement du robot intervienne le plus tôt possible après ouverture de la pince, ce qui diminue encore la durée de l'opération de soudage.

Concernant les valeurs, à titre d'exemple le seuil F1 peut varier de 170 à 550 daN pour des tôles de références de 0,5 a 3 mm. La valeur du seuil F2 par rapport au seuil F1 pourrait présenter une valeur d'environ 50 daN pour un diamètre de déboutonnage des tôles de 6 mm ou une valeur d'environ 35 daN pour un diamètre de déboutonnage des tôles de 4 mm. Concernant le diamètre de déboutonnage, il convient de rappeler qu'un essai destructif pour tester la qualité d'une soudure consiste à séparer les deux tôles par arrachement. La soudure laisse une trace circulaire en creux sur l'une des tôles et en relief sur l'autre. Le diamètre de cette dernière est appelé diamètre de déboutonnage. Il doit être supérieur à une valeur minimale pour que la qualité du point de soudure soit correcte.

Il ressort de la description précédente de l'invention, que celle-ci permet d'optimiser la durée de chaque opération de soudure et d'accroître ainsi la productivité. Ceci constitue un avantage considérable dans des applications telles que l'industrie automobile où un très grand nombre de points de soudure doit être effectué sur un seul véhicule. En effet, par opération de soudage, qui ne dure qu'une fraction de seconde, l'invention permet de gagner quelques centièmes de secondes, ce qui sur le grand nombre d'opérations procure un gain de temps considérable. Ceci est dû au fait que l'invention optimise les temps de fermeture et d'ouverture de la pince en déclenchant certaines opérations aussitôt qu'un seuil est franchi. De plus, l'invention permet d'effectuer un contrôle non destructif de la qualité d'une soudure en s'assurant qu'un seuil d'effort minimal prédéterminé est franchi pendant la phase de passage du courant.

**Revendications**

1. Procédé de soudage par résistance, utilisant au moins une électrode chauffante, selon lequel on met cette électrode en contact avec la pièce à souder, exerce un effort par l'électrode sur la pièce à souder selon un cycle au cours duquel cet effort augmente, puis diminue, et fait passer au cours dudit cycle de soudage un courant électrique dans ladite électrode, caractérisé en ce que l'on établit des valeurs de seuil (F1, F2, F3) dudit effort (F) par des essais préalables en fonction du type des pièces à souder, mesure ledit effort (F) au cours du cycle de soudage et commande certaines opérations de soudage lorsque l'effort (F) mesuré franchit les valeurs de seuil correspondantes.

2. Procédé selon la revendication 1, caractérisé en ce que l'on établit une première valeur de seuil (F1) pendant la phase d'augmentation de l'effort (F) et fait passer le courant électrique dans l'électrode lorsque l'effort mesuré dépasse cette première valeur de seuil (F1).

3. Procédé selon l'une des revendications 1 ou 2, caractérisé en ce que l'on établit une deuxième valeur de seuil (F2) indicatrice d'une qualité satisfaisante de la soudure, et vérifie pendant le passage du courant si l'effort (F) franchit cette deuxième valeur de seuil (F2).

4. Procédé selon l'une des revendications précédentes, caractérisé en ce qu'on établit une troisième valeur de seuil (F3) pendant la phase de diminution de l'effort (F) à laquelle on peut donner l'ordre de déplacer le robot afin que ce déplacement ait lieu le plus tôt possible après l'ouverture de la pince, compte tenu du temps de dialogue avec le robot, et on donne cet ordre lorsque l'effort mesuré franchit cette troisième valeur de seuil.

5. Procédé selon l'une des revendications précédentes, caractérisé en ce que l'on déclenche une alarme ou une opération prédéterminée si l'un des seuils (F1, F2, F3) n'est pas franchi au bout d'une durée de temps prédéterminée.

6. Système pour la mise en oeuvre du procédé selon l'une des revendications 1 à 5, du type comprenant au moins une électrode chauffante commandée par un dispositif tel qu'un robot et apte à exercer des efforts sur une pièce à souder suivant un cycle au cours duquel cet effort augmente, puis diminue, au moins un capteur de mesure d'un paramètre de soudage et un dispositif de commande programmable apte à recevoir des signaux du capteur et à donner des ordres au robot en fonction de ces signaux, caractérisé en ce que le capteur (12) est un capteur de force mesurant l'effort (F) exercé par l'électrode sur la pièce à souder (3, 4) et en ce que le dispositif de commande (9) est programmé pour donner des ordres prédéterminés au robot lorsque l'effort (F) franchit lesdites valeurs de seuil (F1, F2, F3) prédéterminées.

7. Système selon la revendication 6, caractérisé en ce que le capteur de force (12) précité est relié, le cas échéant par l'intermédiaire d'un premier conditionneur (13) adapté pour transformer les signaux du capteur en tensions analogiques proportionnelles à ces signaux, au dispositif de commande programmable (9).

8. Système selon la revendication 7, caractérisé en ce qu'il comprend un dispositif détecteur du non franchissement d'une valeur de seuil prédéterminée dans un délai de temps prédéterminé, tel qu'un relais de seuil (15), relié au capteur (12) par l'intermédiaire d'un interrupteur (17) commandé par le dispositif de commande programmable (9).

9. Système selon la revendication 8, caractérisé en ce que l'organe détecteur précité (15) est adapté pour déclencher une alarme ou une modification de certains paramètres de soudage si la deuxième valeur de seuil précitée (F2) n'est pas franchie au bout d'une durée prédéterminée pendant la phase de passage du courant et en ce que le dispositif de commande programmable (9) est adapté pour commander la fermeture de l'interrupteur (17) à la suite du déclenchement de l'écoulement de courant de soudage lors du dépassement de la première valeur de seuil (F1) précitée.

10. Système selon la revendication 9, caractérisé en ce que le dispositif de commande programmable (9) est adapté pour commander l'ouverture de l'interrupteur (17) à la suite du franchissement de la deuxième valeur de seuil (F2) précitée.

11. Système selon l'une des revendications 8 à 10, caractérisé en ce qu'il comprend un deuxième conditionneur (14) monté en amont du dispositif détecteur (15) et adapté pour amplifier les signaux en provenance du capteur (12).

12. Système selon l'une des revendications 7 à 11, caractérisé en ce que le premier conditionneur (13) comprend des moyens de remise à zéro avant chaque cycle de soudage, commandés par le dispositif de commande programmable (9).

FIG. 1

RAZ

EP 0 344 034 A1

Fig. 2

EP 0 344 034 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2527957 (GENERAL ELECTRIC COMPANY) <br> * page 4, ligne 9 - ligne 24 * | 1, 6, 7 | B23K11/24 |
| A | * page 14, ligne 29 - ligne 35 * <br><br> * page 20, ligne 5 - ligne 17 * <br> * page 21, ligne 24 - page 22, ligne 5; figures 3, 5, 6, 7a * <br> --- | 2-5, 8, 9 | |
| X | DE-A-3241897 (VOLKSWAGENWERK AG) <br> * page 11 - 14; revendications 1-15; figures 1, 2 * | 1, 5-8 | |
| A | <br><br> --- | 4, 9, 10, 12 | |
| X | AU-A-416545 (R.V. DORMAN & COMPANY PTY. LTD.) <br> * le document en entier * | 1, 2, 6, 7 | |
| A | --- | 8 | |
| X | GB-A-1162915 (DIGITAL SENSORS INC.) <br> * page 1, ligne 43 - ligne 56 * | 1, 2, 6 | |
| A | * page 2, ligne 114 - page 3, ligne 90; figure 1 * <br> --- | 8-10 | DOMAINES TECHNIQUES RECHERCHES (Int. Cl.4) |
| A | DE-A-3545158 (O. HAHN) <br> * page 5, ligne 45 - page 6, ligne 56 * <br> * page 8, ligne 64 - ligne 67; revendications 1, 2, 4, 5-7; figures 1, 2 * <br> ----- | 1-9 | B23K |

Le présent rapport a été établi pour toutes les revendications

| Lieu de la recherche | Date d'achèvement de la recherche | Examinateur |
|---|---|---|
| LA HAYE | 27 JUILLET 1989 | ARAN D.D. |